# EUROPEAN PATENT APPLICATION

(11) **EP 2 693 133 A1**
(43) Date of publication of application: **05.02.2014**
(21) Application number: 12763639.7
(22) Date of filing: 27.02.2012
(51) Int. Cl.: F24F 11/02

(54) **HEAT SOURCE SYSTEM AND NUMBER-OF-MACHINES CONTROL METHOD FOR HEAT SOURCE SYSTEM**

(30) Priority: 30.03.2011 JP 2011074474
(71) Applicant: Mitsubishi Heavy Industries, Ltd., Tokyo 108-8215 (JP)
(72) Inventor: MATSUO, Minoru, Tokyo 108-8215 (JP); NIKAIDO, Satoshi, Tokyo 108-8215 (JP); NITTA, Masaharu, Tokyo 108-8215 (JP)
(74) Representative: Bongiovanni, Simone
(86) International application number: PCT/JP2012/054729
(87) International publication number: WO 2012/132699

(57) **Abstract**

The need for manual adjustment of a number-of-devices controller when a system is installed or when a new heat source device is added is eliminated, and operation with a high coefficient of performance is possible even when the temperature of a heat-source medium changes. A heat source system (1) includes a plurality of heat source devices (3) that are used as hot-water heat pumps and are connected in parallel with each other, heat-source-device controllers (9) provided for the respective heat source devices (3), and a number-of-devices controller (10) that allocates a hot-water load corresponding to a demand hot-water load to each heat source device (3). Each heat-source-device controller (9) transmits, to the number-of-devices controller (10), a maximum hot-water load that can be handled in the current operating condition, including the temperature of heat-source water, and heat-source-device information indicating an optimal operating range, which is a load range in which a COP of the corresponding heat source device (3) to be controlled becomes higher than or equal to a predetermined value. Then, the number-of-devices controller (10) controls the number of operated devices and performs the hot-water-load allocation based on the heat-source-device information transmitted from each heat-source-device controller (9) so that the corresponding heat source device (3) operates within the optimal operating range.

## Description

### {Technical Field}

The present invention relates to heat source systems and methods for controlling the number of operated devices in heat source systems.

### {Background Art}

In the related art, a known example of a heat source system that achieves cooling and heating of a local area, cooling and heating of a facility, and so on is a heat source system that is equipped with a plurality of heat source devices, such as centrifugal chillers. In this heat source system, a number-of-devices controller controls the number of operated heat source devices in accordance with the load demand of an external load. When controlling the number of operated devices, an energy saving effect is desirably achieved by making each operated heat source device operate at high efficiency.

In order to enhance the coefficient of performance (COP) of the entire heat source system, control is performed based on the COP characteristics of the heat source devices and auxiliary devices (such as various pumps).

As an example of such control, PTL 1 discusses a method for controlling the operation of a cooling-energy source. The method includes: creating a table, from which the COP of the entire system, including various auxiliary devices, the chiller load factor, and the chiller outlet temperature of cooling water can be ascertained for each chiller, each delivered-cold-water temperature, and each cooling-water temperature difference based on an outdoor wet-bulb temperature and an estimated cooling-load value, by using a characteristic indicating a load factor and a COP or power consumption of each chiller versus the cooling-water temperature of the chiller, a characteristic indicating the flow rate and power consumption of each pump versus the cooling-water temperature of each chiller, and a characteristic indicating the air flow and power consumption of a cooling-tower fan versus the cooling-water temperature of each chiller; determining, from the table, parameters that are to be used in a mathematical expression and that achieve the highest COP of the entire system; controlling the number of and the output power of operating chillers based on the calculated result; and controlling the flow rate and the temperature of the cooling water.

### {Citation List}

### {Patent Literature}

{PTL 1} Japanese Unexamined Patent Application, Publication No. 2008-134013

### {Summary of Invention}

### {Technical Problem}

However, with regard to the COP characteristic of each heat source device, a COP characteristic is preliminarily input to the number-of-devices controller included in the heat source system and is corrected in accordance with the actual operation. Therefore, if a heat source device having a different COP characteristic or a new differently-designed heat source device is to be added to the heat source system, a new COP characteristic needs to be input to the number-of-devices controller.

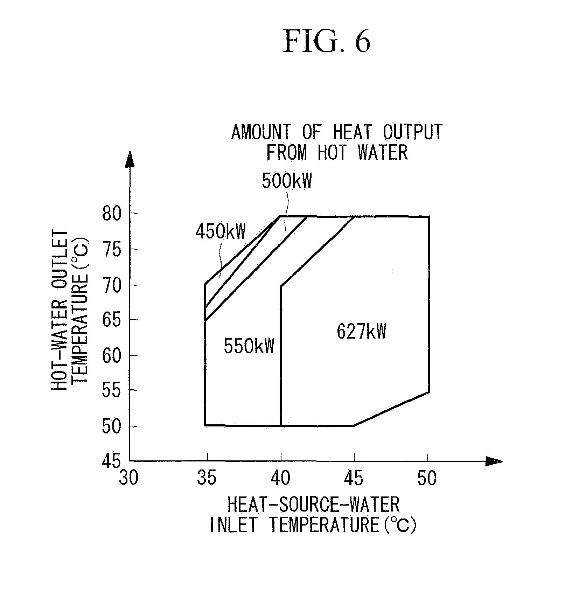

Furthermore, in heat source devices used as hot-water heat pumps, the maximum capacity that can be output changes in accordance with a change in the temperature of heat-source water (heat-source medium), as shown in a graph in Fig. 6 that illustrates the relationship between the heat-source-water inlet temperature and the amount of heat output from a hot-water heat pump. Therefore, the COP of the entire heat source system may change in accordance with a change in the temperature of the heat-source medium. In particular, if the heat-source water is of a type that uses exhaust heat from a facility, etc., the temperature of the heat-source water may change frequently. A change in the temperature of the heat-source water causes the temperature and the pressure in an evaporator to change. This causes the head of a compressor to change, resulting in a change in the maximum capacity that can be output.

The present invention has been made in view of such circumstances, and an object thereof is to provide a heat source system and a method for controlling the number of operated devices in the heat source system that eliminate the need for manual adjustment of a number-of-devices controller when the system is installed or when a new heat source device is added, and that allow for operation with a high coefficient of performance even when the temperature of a heat-source medium changes.

### {Solution to Problem}

In order to solve the aforementioned problems, a heat source system and a method for controlling the number of operated devices in the heat source system according to the present invention employ the following solutions.

Specifically, a heat source system according to a first aspect of the present invention includes a plurality of heat source devices connected in parallel with each other and each having a compressor that compresses a refrigerant, a condenser that condenses the compressed refrigerant by using a heating medium, and an evaporator that evaporates the condensed refrigerant and that makes the refrigerant and a heat-source medium exchange heat with each other; heat-source-device controllers provided for the respective heat source devices and controlling the heat source devices; and a number-of-devices controller that controls activation and deactivation of the plurality of heat source devices and that allocates a load corresponding to a demand load to each heat source device that is operated. Each heat-source-device controller transmits, to the number-of-devices controller, a maximum load that can be handled in a current operating condition of the corresponding heat source device to be controlled, including the temperature of the heat-source medium, and heat-source-device information indicating an optimal operating range, which is a load range in which a coefficient of performance of the heat source device to be controlled becomes higher than or equal to a predetermined value. The number-of-devices controller controls the number of operated devices and performs the load allocation based on the heat-source-device information transmitted from each heat-source-device controller and a value indicating the operating condition so that the corresponding heat source device operates within the optimal operating range.

According to the first aspect, the heat source system includes the plurality of heat source devices connected in parallel with each other and each having the compressor that compresses the refrigerant, the condenser that condenses the compressed refrigerant by using the heating medium, and the evaporator that evaporates the condensed refrigerant and that makes the refrigerant and the heat-source medium exchange heat with each other; the heat-source-device controllers provided for the respective heat source devices and controlling the heat source devices; and the number-of-devices controller that controls activation and deactivation of the plurality of heat source devices and that allocates a load corresponding to a demand load to each heat source device that is operated.

The heat source devices are used as so-called hot-water heat pumps that make the heating medium flow into and out from the condensers.

Each heat-source-device controller transmits, to the number-of-devices controller, a maximum load that can be handled in the current operating condition, including the temperature of the heat-source medium, and the heat-source-device information indicating the optimal operating range, which is a load range in which the coefficient of performance of the corresponding heat source device to be controlled becomes higher than or equal to the predetermined value.

The number-of-devices controller controls the number of operated devices and performs the load allocation based on the heat-source-device information transmitted from each heat-source-device controller and a value indicating the operating condition so that the corresponding heat source device operates within the optimal operating range.

Because each heat-source-device controller transmits, to the number-of-devices controller, a maximum load corresponding to the operating condition of the corresponding heat source device to be controlled and the heat-source-device information indicating the optimal operating range, the number-of-devices controller does not need to be adjusted even when the characteristics of the heat source device are changed or when a new heat source device is added.

In each heat source device used as a hot-water heat pump, the maximum capacity that can be output changes in accordance with the temperature of the heat-source medium. The corresponding heat-source-device controller determines a maximum load that can be handled in the current operating condition, including the temperature of the heat-source medium, and the number-of-devices controller controls the number of operated devices and performs the load allocation by taking into account the maximum load, thereby allowing for operation of the heat source system in response to a change in the temperature of the heat-source medium.

Accordingly, the first aspect eliminates the need for manual adjustment of the number-of-devices controller when the system is installed or when a new heat source device is added, and allows for operation with a high coefficient of performance even when the temperature of the heat-source medium changes.

In the first aspect, the value indicating the operating condition may include a preset temperature of the heating medium flowing out from the condenser and the temperature of the heat-source medium flowing out from the evaporator.

According to the first aspect, the value indicating the operating condition of each heat source device includes the preset temperature of the heating medium flowing out from the condenser and the temperature of the heat-source medium flowing out from the evaporator. Because the temperature of the heat-source medium flowing out from the evaporator dominates over the temperature and the pressure in the evaporator, the head of the compressor changes in accordance with the temperature of the heat-source medium, resulting in a change in the maximum capacity that can be output from the heat source device, that is, a change in the maximum load that can be handled. Therefore, using the temperature of the heat-source medium flowing out from the evaporator as the value indicating the operating condition of the heat source device allows for more reliable operation with a high coefficient of performance even when the temperature of the heat-source medium changes.

Furthermore, in the heat source system according to the first aspect, the value indicating the operating condition may include a preset temperature of the heating medium flowing out from the condenser, the temperature of the heat-source medium flowing into the evaporator, and the flow rate of the heat-source medium.

According to the first aspect, the value indicating the operating condition of each heat source device includes the preset temperature of the heating medium flowing out from the condenser, the temperature of the heat-source medium flowing into the evaporator, and the flow rate of the heat-source medium.

In each heat source device, the maximum capacity that can be output, that is, the maximum load that can be handled, changes in accordance with a change in the state (i.e., the temperature and the flow rate) of the heat-source medium. If the temperature of the heat-source medium flowing out from the evaporator is used as the value that indicates the operating condition, there is a possibility of a delay in the response to a change in the state of the heat-source medium.

In the first aspect, the value indicating the operating condition of each heat source device includes the temperature and the flow rate of the heat-source medium flowing into the evaporator so that a change in the load can be coped with before the temperature of the heat-source medium flowing out from the evaporator changes. Thus, a change in the maximum load that can be handled by the heat source device can be ascertained more quickly, thereby allowing for quicker response to a change in the load.

In the heat source system having the above-described configuration, each heat-source-device controller may increase the flow rate of the heat-source medium when the temperature of the heat-source medium flowing into the corresponding evaporator becomes lower than or equal to a predetermined value.

With this configuration, the flow rate of the heat-source medium is increased when the temperature of the heat-source medium flowing into the evaporator becomes lower than or equal to the predetermined value. Therefore, the amount of heat in the heat-source medium increases even if the temperature of the heat-source medium is the same, so that a decrease in the maximum load of the heat source device is suppressed, thereby reducing the number of times the number of operated devices is controlled by the number-of-devices controller and the number of times the load allocation is changed by the number-of-devices controller.

A second aspect of the present invention provides a method for controlling the number of operated devices in a heat source system including a plurality of heat source devices connected in parallel with each other and each having a compressor that compresses a refrigerant, a condenser that condenses the compressed refrigerant by using a heating medium, and an evaporator that evaporates the condensed refrigerant and that makes the refrigerant and a heat-source medium exchange heat with each other; heat-source-device controllers provided for the respective heat source devices and controlling the heat source devices; and a number-of-devices controller that controls activation and deactivation of the plurality of heat source devices and that allocates a load corresponding to a demand load to each heat source device that is operated. The method includes a first step of causing each heat-source-device controller to transmit, to the number-of-devices controller, a maximum load that can be handled in a current operating condition of the corresponding heat source device to be controlled, including the temperature of the heat-source medium, and heat-source-device information indicating an optimal operating range, which is a load range in which a coefficient of performance of the heat source device to be controlled becomes higher than or equal to a predetermined value; and a second step of causing the number-of-devices controller to control the number of operated devices and perform the load allocation based on the heat-source-device information transmitted from each heat-source-device controller so that the corresponding heat source device operates within the optimal operating range.

### {Advantageous Effects of Invention}

The present invention is advantageous in that it eliminates the need for manual adjustment of the number-of-devices controller when the system is installed or when a new heat source device is added, and allows for operation with a high coefficient of performance even when the temperature of the heat-source medium changes.

### {Brief Description of Drawings}

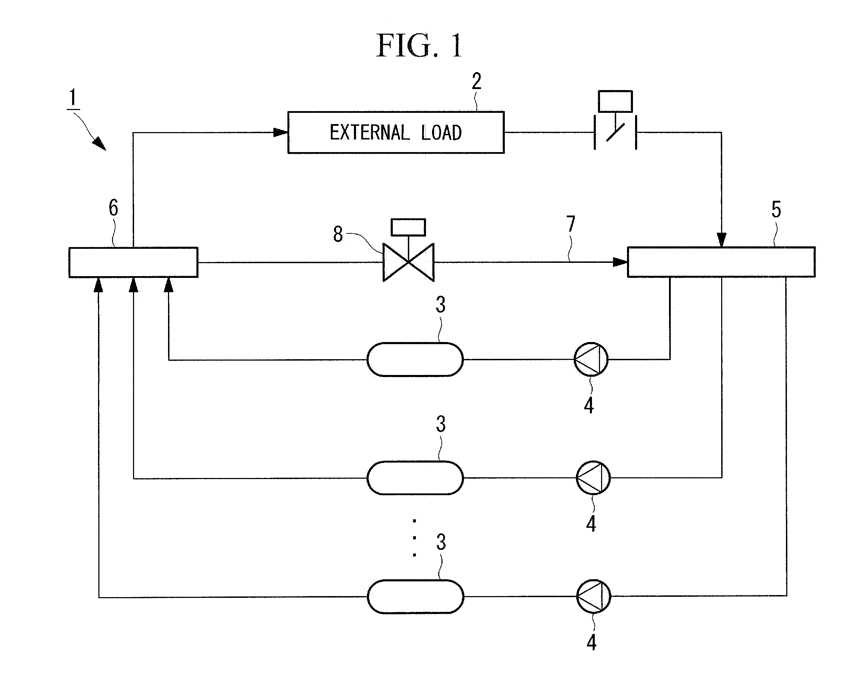

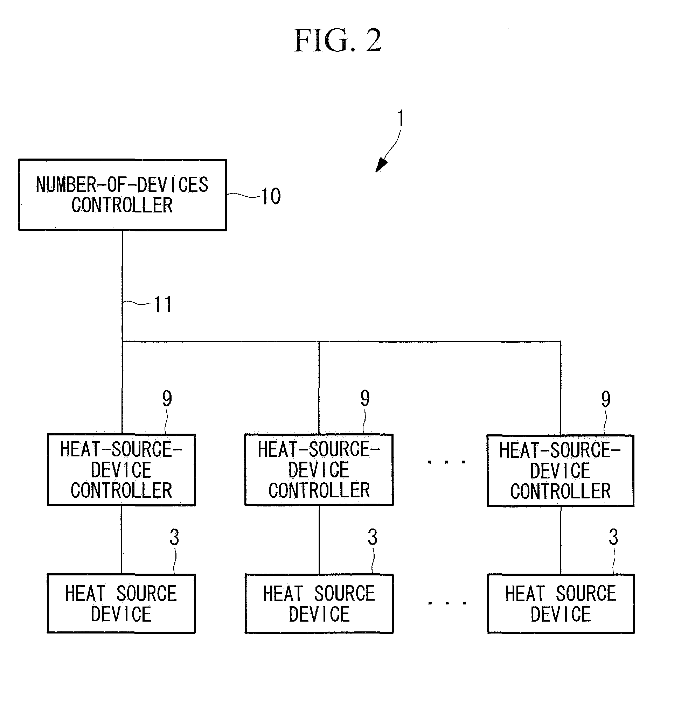

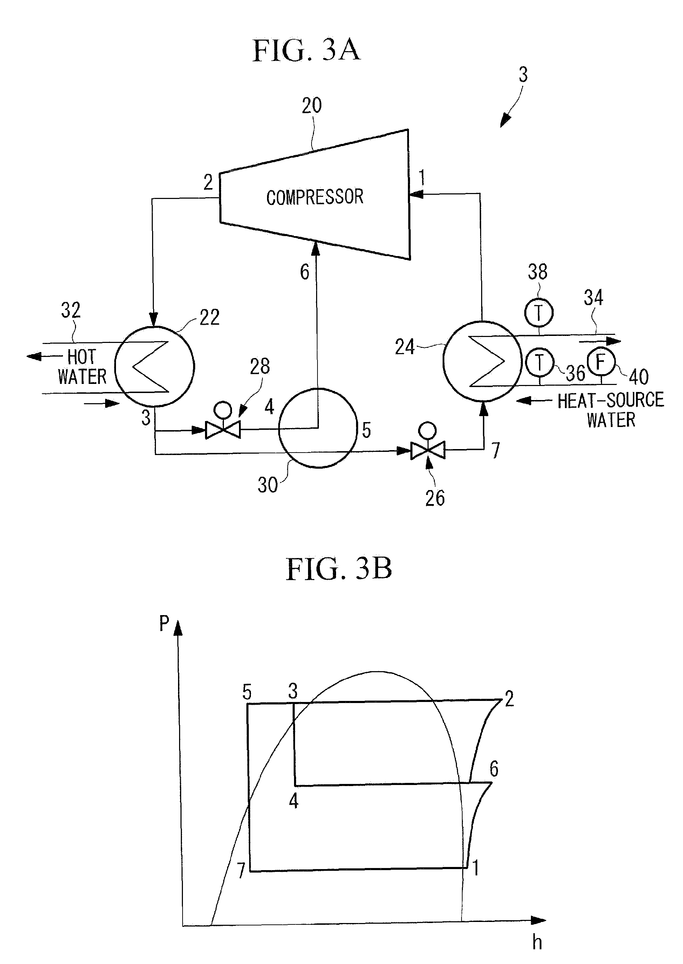

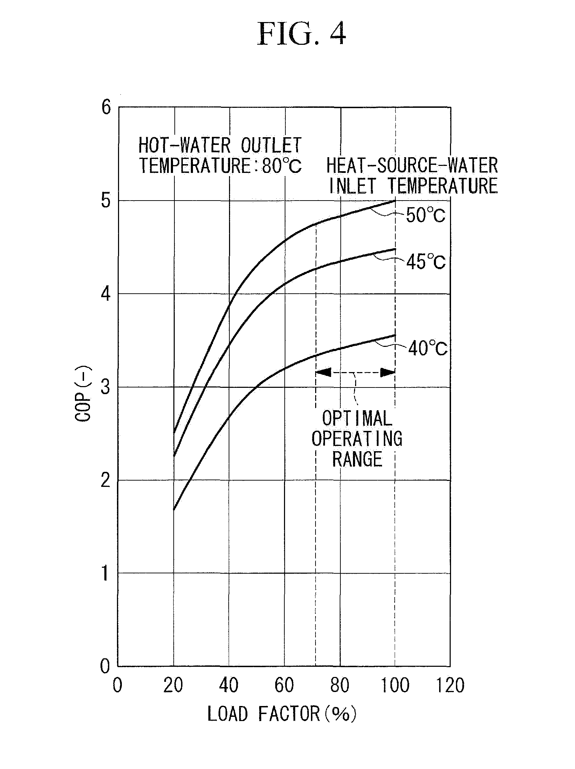

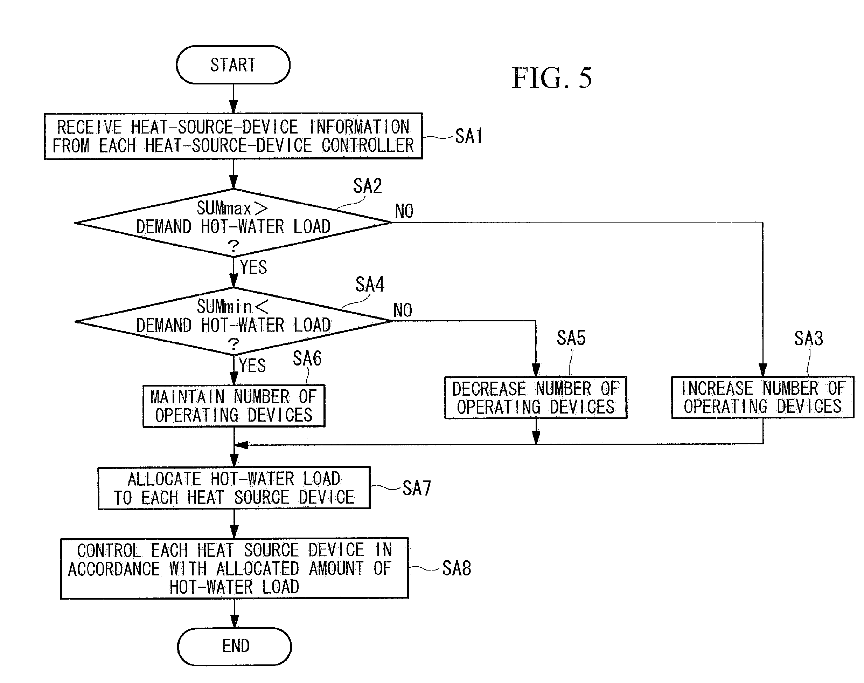

{Fig. 1} Fig. 1 schematically illustrates the overall configuration of a heat source system according to a first embodiment of the present invention.
{Fig. 2} Fig. 2 schematically illustrates the configuration of a control system for controlling the number of operated devices in the heat source system according to the first embodiment of the present invention.
{Fig. 3A} Fig. 3A schematically illustrates the configuration of each heat source device according to the first embodiment of the present invention.
{Fig. 3B} Fig. 3B is a cycle diagram of each heat source device according to the first embodiment of the present invention.
{Fig. 4} Fig. 4 illustrates an example of a COP characteristic map according to the first embodiment of the present invention.
{Fig. 5} Fig. 5 illustrates the control flow related to a process performed by a number-of-devices controller for controlling the number of operated heat source devices in the heat source system according to the first embodiment of the present invention.
{Fig. 6} Fig. 6 is a graph illustrating the relationship between a heat-source-water inlet temperature and an amount of heat output from a hot-water heat pump.

### {Description of Embodiments}

Embodiments of a heat source system and a method for controlling the number of operated devices in the heat source system according to the present invention will be described below with reference to the drawings.

### {First Embodiment}

A first embodiment of the present invention will be described below.

Fig. 1 schematically illustrates the overall configuration of a heat source system 1 according to the first embodiment. The heat source system 1 is installed in, for example, a building or a facility. As shown in Fig. 1, the heat source system 1 includes a plurality of heat source devices 3 that apply heat to hot water (heating medium) to be supplied to an external load 2, such as an air conditioner or a fan coil. These heat source devices 3 are disposed in parallel with the external load 2.

Hot-water pumps 4 that pressure-feed the hot water are disposed at the upstream side of the heat source devices 3 as viewed in the flowing direction of the hot water. The hot water from a return header 5 is delivered to the heat source devices 3 by these hot-water pumps 4. Each of the hot-water pumps 4 is driven by an inverter motor, whereby the flow rate is variably controlled by adjusting the rotation speed thereof.

A supply header 6 collects the hot water obtained in the heat source devices 3. The hot water collected by the supply header 6 is supplied to the external load 2. After being supplied to the air conditioner, the fan coil, or the like in the external load 2, the hot water is delivered to the return header 5. At the return header 5, the hot water is distributively delivered to the heat source devices 3.

A bypass pipe 7 is provided between the return header 5 and the supply header 6, and the flow rate of hot water flowing through the bypass pipe 7 is adjusted by a bypass valve 8.

Fig. 2 schematically illustrates the configuration of a control system for controlling the number of operated devices in the heat source system 1 according to the first embodiment. As shown in Fig. 2, the heat source system 1 includes the plurality of heat source devices 3, heat-source-device controllers 9 that are provided for the respective heat source devices 3 and control the heat source devices 3, and a number-of-devices controller 10 that controls the activation and deactivation of the plurality of heat source devices 3 and allocates a hot-water load to each operated heat source device 3 in accordance with a demand hot-water load, which is a load demanded by the external load 2.

The heat source devices 3 are each used as a hot-water heat pump. The heat source devices 3 do not need to be of the same type, and may be of different types or have different specifications.

The heat-source-device controllers 9 are connected to the number-of-devices controller 10 via a wired or wireless communication medium 11 such that bidirectional communication is possible.

Fig. 3A schematically illustrates the configuration of each heat source device 3 according to the first embodiment, showing a refrigerant circuit in the heat source device 3 according to the first embodiment.

Each heat source device 3 includes a centrifugal compressor (compressor) 20, a condenser 22 that condenses a high-pressure gas refrigerant compressed by the centrifugal compressor 20, an evaporator 24 that evaporates the condensed refrigerant, a main expansion valve 26 that is provided between the condenser 22 and the evaporator 24 and expands a liquid refrigerant guided from the condenser 22, a sub expansion valve 28 that is provided between the condenser 22 and an intermediate section of the centrifugal compressor 20 and expands the liquid refrigerant diverted from between the condenser 22 and the main expansion valve 26, and an economizer 30 that allows heat exchange between the refrigerant flowing from the condenser 22 toward the main expansion valve 26 and the refrigerant expanded by the sub expansion valve 28.

The centrifugal compressor 20 is a centrifugal compressor that can obtain a high-pressure ratio and includes, within a housing, two coaxial impellers (not shown) and an inlet vane (not shown) that adjusts the flow rate of refrigerant to be taken in.

The two impellers are rotated by a driving motor (not shown) and are connected in series with a refrigerant flow path. The refrigerant flowing into the centrifugal compressor 20 is compressed by the impeller located at the upstream side and is then further compressed by the impeller located at the downstream side. The gas refrigerant expanded by the sub expansion valve 28 is guided between (i.e., to an intermediate section between) the two impellers.

The condenser 22 is connected to a hot-water pipe 32 that supplies the hot water to the external load 2, and allows heat exchange between the hot water circulating through the hot-water pipe 32 and the high-pressure gas refrigerant so as to condense and liquefy the high-pressure gas refrigerant.

The evaporator 24 is connected to a heat-source-water pipe 34 and allows heat exchange between the refrigerant guided from the main expansion valve 26 and heat-source water (heat-source medium) circulating through the heat-source-water pipe 34, so as to evaporate the refrigerant and to cool the heat-source water with the latent heat of vaporization of the refrigerant. The heat-source-water pipe 34 is provided with a heat-source-water inlet temperature sensor 36 that measures the temperature (referred to as "heat-source-water inlet temperature" hereinafter) of the heat-source water flowing into the evaporator 24, and a heat-source-water outlet temperature sensor 38 that measures the temperature (referred to as "heat-source-water outlet temperature" hereinafter) of the heat-source water flowing out from the evaporator 24. Furthermore, the heat-source-water pipe 34 is provided with a heat-source-water flow-rate sensor 40 that measures the flow rate of the heat-source water.

The heat-source water used in the heat source devices 3 according to the first embodiment is, for example, heat-source water that utilizes exhaust heat that is no longer needed in another device (such as a cooling tower or another facility).

Fig. 3B is a cycle diagram of each heat source device 3 according to the first embodiment.

The positions of numerical characters (1 to 7) shown in Fig. 3B correspond to the pressure and the enthalpy at the positions of numerical characters (1 to 7) shown in Fig. 3A. When the temperature of the heat-source water changes in the heat source device 3, the temperature and the pressure in the evaporator 24 change correspondingly so that the head of the turbo-compressor 20 changes, causing a change in the maximum capacity that can be output.

The heat-source-device controllers 9 each store a coefficient-of-performance (referred to as "COP" hereinafter) characteristic map that shows the relationship between a load factor and a COP for various heat-source-water inlet temperatures that correspond to each predetermined hot-water outlet temperature in the corresponding heat source device 3 to be controlled. The COP characteristic map shows a COP characteristic of the entire heat source device 3, which includes the characteristics of auxiliary devices (e.g. the hot-water pump 4 and a heat-source-water pump) for the heat source device, or a COP characteristic of the heat source device alone, which excludes the characteristics of the auxiliary devices.

Fig. 4 illustrates an example of a COP characteristic map in the case where the heat-source water flows at a rated flow rate. In the COP characteristic map, the horizontal axis denotes the load factor, whereas the vertical axis denotes the COP. The example in Fig. 4 shows COP characteristics for various heat-source-water inlet temperatures when the hot-water outlet temperature is 80 °C. The COP tends to become higher as the heat-source-water outlet temperature becomes high. The COP characteristic map can be obtained by, for example, performing tests before shipment of the heat source devices 3. The COP characteristic map is created by employing a known technique.

Furthermore, each heat-source-device controller 9 stores an optimal operating range, which is a load range in which the COP of the corresponding heat source device 3 to be controlled becomes higher than or equal to a predetermined value (for example, higher than or equal to 80% of a maximum value), together with the COP characteristic map.

Then, the heat-source-device controller 9 transmits, to the number-of-devices controller 10, a maximum hot-water load that can be handled in the current operating condition of the heat source device 3 to be controlled, including the temperature of the heat-source water, and heat-source-device information indicating the optimal operating range.

Therefore, the heat-source-device controller 9 calculates a maximum hot-water load that can be handled in the current operating condition of the heat source device 3 to be controlled.

In the first embodiment, a preset temperature (referred to as "preset hot-water outlet temperature" hereinafter) of hot water flowing out from the condenser 22 and the heat-source-water outlet temperature measured by the heat-source-water outlet temperature sensor 38 provided in the heat-source-water pipe 34 are used as values that indicate the operating condition.

Because the heat-source-water outlet temperature dominates over the temperature and the pressure in the evaporator 24, the head of the centrifugal compressor 20 changes in accordance with the temperature of the heat-source water, resulting in a change in the maximum capacity that can be output from the heat source device, that is, a change in the maximum hot-water load that can be handled. Therefore, using the heat-source-water outlet temperature as a value that indicates the operation condition of the heat source device 3 more reliably allows for operation with a high COP even when the temperature of the heat-source water changes.

The heat-source-device controller 9 calculates a heat-source-water inlet temperature by subtracting a heat-source-water inlet-outlet temperature difference from the heat-source-water outlet temperature. The heat-source-water inlet-outlet temperature difference is a temperature difference set in advance as a preset value between the heat-source-water inlet temperature and the heat-source-water outlet temperature of the heat-source water flowing at a rated flow rate and is, for example, 5° C.

Based on the COP characteristic map corresponding to the preset hot-water outlet temperature, the heat-source-device controller 9 determines a maximum hot-water load that can be handled in the heat source device 3 and that corresponds to the calculated heat-source-water inlet temperature.

Based on the heat-source-device information transmitted from the heat-source-device controllers 9, the number-of-devices controller 10 controls the number of operated devices and performs hot-water load allocation so that the corresponding heat source devices 3 operate within the optimal operating range. Moreover, the number-of-devices controller 10 also controls, for example, the auxiliary devices, such as the various pumps that feed the hot water and the heat-source water.

Accordingly, because each heat-source-device controller 9 transmits the heat-source-device information, indicating the maximum hot-water load and the optimal operating range corresponding to the operating condition of the heat source device 3 to be controlled, to the number-of-devices controller 10, the number-of-devices controller 10 does not need to be adjusted even when the characteristics of the heat source device 3 are changed or when a new heat source device 3 is added. In each heat source device 3 used as a hot-water heat pump, the maximum hot-water load that can be output changes in accordance with the temperature of the heat-source water. The corresponding heat-source-device controller 9 determines a maximum hot-water load that can be handled in the current operating condition, including the temperature of the heat-source water, and the number-of-devices controller 10 controls the number of operated devices and performs the hot-water load allocation on the heat source device 3 by taking into account the maximum hot-water load, thereby allowing for operation of the heat source system 1 in response to a change in the temperature of the heat-source water.

Of the various kinds of control performed by the number-of-devices controller 10, a process related to the control of the number of operated heat source devices 3 will be described below with reference to Fig. 5. The process to be described below is performed at, for example, predetermined intervals.

First, when the number-of-devices controller 10 receives heat-source-device information from the heat-source-device controllers 9 (step SA1 in Fig. 5), the number-of-devices controller 10 calculates a total SUMmax of maximum hot-water loads of currently-operated heat source devices 3 based on the received heat-source-device information and determines whether the total SUMmax is above a demand hot-water load of the heat source system 1 (step SA2 in Fig. 5). If the total SUMmax is smaller than or equal to the demand hot-water load, the number of operating heat source devices 3 is increased (step SA3 in Fig. 5) so that the current demand hot-water load is met, and the process proceeds to step SA7.

On the other hand, if the total SUMmax is above the demand hot-water load of the heat source system 1 in step SA2, minimum loads in the optimal operating range (i.e., minimum load factors in the optimal operating range) of the currently-operated heat source devices 3 are extracted based on the received heat-source-device information, a sum SUMmin of these minimum loads is calculated, and it is determined whether or not the sum SUMmin is below the demand hot-water load (step SA4 in Fig. 5). If the sum SUMmin is larger than or equal to the demand hot-water load, the number of operating heat source devices 3 is reduced to a range that covers the current demand hot-water load (step SA5 in Fig. 5), and the process proceeds to step SA7. On the other hand, if the sum SUMmin is below the demand hot-water load of the heat source system 1 in step SA4, the number of operating devices is maintained as is (step SA6 in Fig. 5), and the process proceeds to step SA7. The changing of the number of operating devices in step SA3 and step SA5 is performed based on, for example, a preset order of priority for activating or deactivating the heat source devices 3.

In step SA7, the demand hot-water load is allocated to each of the currently-operated heat source devices 3 such that the heat source devices 3 will satisfactorily operate within the optimal operating range, and allocation information indicating the allocated amount is transmitted to the corresponding heat-source-device controllers 9. Each heat-source-device controller 9 controls the corresponding heat source device 3 to be controlled so as to cope with the hot-water load allocated from the number-of-devices controller 10 (step SA8 in Fig. 5).

As described above, the heat source system 1 according to the first embodiment includes a plurality of heat source devices 3 that are used as hot-water heat pumps and are connected in parallel with each other, heat-source-device controllers 9 that are provided for the respective heat source devices 3 and control the heat source devices, and a number-of-devices controller 10 that controls the activation and deactivation of the plurality of heat source devices 3 and allocates a hot-water load corresponding to a demand hot-water load to each operated heat source device 3. Each heat-source-device controller 9 transmits, to the number-of-devices controller 10, a maximum hot-water load that can be handled in the current operating condition, including the temperature of the heat-source water, and heat-source-device information indicating the optimal operating range, which is a load range in which the COP of the corresponding heat source device 3 to be controlled becomes higher than or equal to a predetermined value. Based on the heat-source-device information transmitted from each of the heat-source-device controller 9, the number-of-devices controller 10 controls the number of operated devices and performs hot-water load allocation so that the heat source device 3 operates within the optimal operating range.

Therefore, in the heat source system 1 according to the first embodiment, the number-of-devices controller 10 does not need to be manually adjusted when the system is installed or when a new heat source device 3 is added, and operation with a high COP is possible even when the temperature of the heat-source water changes.

Furthermore, the heat source system 1 according to the first embodiment uses a preset hot-water outlet temperature and a heat-source-water outlet temperature as values that indicate the operating condition of each heat source device 3, thereby more reliably allowing for operation with a high COP even when the temperature of the heat-source water changes.

### {Second Embodiment}

A second embodiment of the present invention will be described below.

Because the configurations of a heat source system 1 and heat source devices 3 according to the second embodiment are the same as the configurations of the heat source system 1 and the heat source devices 3 according to the first embodiment shown in Figs. 1 to 3, descriptions thereof will be omitted.

In the heat source system 1 according to the second embodiment, the preset hot-water outlet temperature, the heat-source-water inlet temperature measured by the heat-source-water inlet temperature sensor 36, and the flow rate of heat-source water measured by the heat-source-water flow-rate sensor 40 are used as values indicating the operating condition of each heat source device 3.

As described above, in each heat source device 3, the maximum capacity that can be output, that is, the maximum hot-water load that can be handled, changes in accordance with a change in the state (i.e., the temperature and the flow rate) of the heat-source water. If the heat-source-water outlet temperature is used as a value that indicates the operating condition, there is a possibility of a delay in the response to a change in the state of the heat-source water.

The heat source system 1 according to the second embodiment uses the heat-source-water inlet temperature and the flow rate of the heat-source water as values that indicate the operating condition of each heat source device 3 so as to cope with a change in the hot-water load before the heat-source-water outlet temperature changes. Thus, a change in the maximum hot-water load that can be handled by the heat source device 3 can be ascertained more quickly, thereby allowing for quicker response to a change in the hot-water load.

In the second embodiment, if the flow rate of the heat-source water is lower than a rated flow rate, a maximum hot-water load to be determined based on the COP characteristic map is determined from a COP characteristic corresponding to a heat-source-water inlet temperature that is lower than the measured heat-source-water inlet temperature value in accordance with a difference between the rated flow rate and the measured flow rate value of the heat-source water. For example, if the heat-source-water inlet temperature measured by the heat-source-water inlet temperature sensor 36 is 50 °C and the flow rate of the heat-source water measured by the heat-source-water flow-rate sensor 40 is 50% of the rated flow rate, the maximum hot-water load is determined from a COP characteristic corresponding to a case where the heat-source-water inlet temperature is 45 °C.

On the other hand, if the flow rate of the heat-source water is higher than the rated flow rate, a maximum hot-water load to be determined based on the COP characteristic map is determined from a COP characteristic corresponding to a heat-source-water inlet temperature that is higher than the measured heat-source-water inlet temperature value in accordance with a difference between the rated flow rate and the measured flow rate value of the heat-source water.

This is because the amount of heat in the heat-source water varies with different flow rates even if the heat-source-water inlet temperature is the same. Since each COP characteristic shown in the example in Fig. 4 is a value corresponding to a case where the flow rate of the heat-source water is equal to the rated flow rate, a maximum hot-water load is determined from a COP characteristic corresponding to a heat-source-water inlet temperature that is lower or higher than the measured value in accordance with a difference between the rated flow rate and the measured flow rate value of the heat-source water.

The amount of heat in the heat-source water changes in this manner in accordance with the temperature and the flow rate. Specifically, when the temperature of the heat-source water is low, the amount of heat therein can be increased by increasing the flow rate.

Each of the heat-source-device controllers 9 according to the second embodiment increases the flow rate of the heat-source water when the heat-source-water inlet temperature becomes lower than or equal to a predetermined value. When the heat-source-water inlet temperature decreases, the maximum hot-water load of the corresponding heat source device 3 also decreases. However, by increasing the flow rate of the heat-source water, the amount of heat in the heat-source water increases even if the temperature of the heat-source water is the same, so that a decrease in the maximum hot-water load of the heat source device 3 is suppressed, thereby reducing the number of times the number of operated devices is controlled by the number-of-devices controller 10 and the number of times the allocation of the hot-water load is changed by the number-of-devices controller 10.

Although the present invention has been described above with reference to the above embodiments, the technical scope of the invention is not limited to that described in the embodiments. Various modifications and alterations may be made to the above embodiments so long as they do not depart from the spirit of the invention, and embodiments with the aforementioned modifications and alterations added thereto are included in the technical scope of the invention.

For example, although each heat-source-device controller 9 is configured to store a COP characteristic of a heat source device to be controlled in the form of a map in the above embodiments, the present invention is not limited to this configuration; for example, each heat-source-device controller 9 may be configured to store a COP characteristic of a heat source device to be controlled in the form of a mathematical expression.

Furthermore, although the flow rate of the heat-source water is measured by the heat-source-water flow-rate sensor 40 in the above embodiments, the present invention is not limited to this configuration; for example, the flow rate of the heat-source water may be calculated from the temperature of the heat-source water, the temperature and the pressure of the refrigerant in the evaporator 24, and so on, instead of being measured by the heat-source-water flow-rate sensor 40.

Furthermore, although each heat source device 3 is equipped with the economizer 30 and the cntrifugal compressor 20 of a two-stage compression type in the above embodiments, the present invention is not limited to this configuration; for example, each heat source device 3 may be of another type, such as a heat source device 3 not equipped with an economizer 30 and a two-stage compression type centrifugal compressor 20.

Furthermore, although the heat source devices 3 are described as being hot-water heat pumps (centrifugal heat pumps) that use centrifugal compressors in the above embodiments, the present invention is not limited to this configuration, and other compression types, such as screw heat pumps that use screw compressors, may be used.

### {Reference Signs List}

- 1: heat source system
- 3: heat source device
- 9: heat-source-device controller
- 10: number-of-devices controller
- 20: centrifugal compressor
- 22: condenser
- 24: evaporator

## Claims

1. A heat source system comprising:
a plurality of heat source devices connected in parallel with each other and each having a compressor that compresses a refrigerant, a condenser that condenses the compressed refrigerant by using a heating medium, and an evaporator that evaporates the condensed refrigerant and that makes the refrigerant and a heat-source medium exchange heat with each other;
heat-source-device controllers provided for the respective heat source devices and controlling the heat source devices; and
a number-of-devices controller that controls activation and deactivation of the plurality of heat source devices and that allocates a load corresponding to a demand load to each heat source device that is operated,
wherein each heat-source-device controller transmits, to the number-of-devices controller, a maximum load that can be handled in a current operating condition of the corresponding heat source device to be controlled, including the temperature of the heat-source medium, and heat-source-device information indicating an optimal operating range, which is a load range in which a coefficient of performance of the heat source device to be controlled becomes higher than or equal to a predetermined value, and
wherein the number-of-devices controller controls the number of operated devices and performs the load allocation based on the heat-source-device information transmitted from each heat-source-device controller and a value indicating the operating condition so that the corresponding heat source device operates within the optimal operating range.

2. The heat source system according to Claim 1, wherein the value indicating the operating condition includes a preset temperature of the heating medium flowing out from the condenser and the temperature of the heat-source medium flowing out from the evaporator.

3. The heat source system according to Claim 1, wherein the value indicating the operating condition includes a preset temperature of the heating medium flowing out from the condenser, the temperature of the heat-source medium flowing into the evaporator, and the flow rate of the heat-source medium.

4. The heat source system according to Claim 3, wherein each heat-source-device controller increases the flow rate of the heat-source medium when the temperature of the heat-source medium flowing into the corresponding evaporator becomes lower than or equal to a predetermined value.

5. A method for controlling the number of operated devices in a heat source system including a plurality of heat source devices connected in parallel with each other and each having a compressor that compresses a refrigerant, a condenser that condenses the compressed refrigerant by using a heating medium, and an evaporator that evaporates the condensed refrigerant and that makes the refrigerant and a heat-source medium exchange heat with each other; heat-source-device controllers provided for the respective heat source devices and controlling the heat source devices; and a number-of-devices controller that controls activation and deactivation of the plurality of heat source devices and that allocates a load corresponding to a demand load to each heat source device that is operated, the method comprising:
a first step of causing each heat-source-device controller to transmit, to the number-of-devices controller, a maximum load that can be handled in a current operating condition of the corresponding heat source device to be controlled, including the temperature of the heat-source medium, and heat-source-device information indicating an optimal operating range, which is a load range in which a coefficient of performance of the heat source device to be controlled becomes higher than or equal to a predetermined value; and
a second step of causing the number-of-devices controller to control the number of operated devices and perform the load allocation based on the heat-source-device information transmitted from each heat-source-device controller so that the corresponding heat source device operates within the optimal operating range.
